# EUROPEAN PATENT APPLICATION

(11) **EP 1 531 509 A1**
(43) Date of publication of application: **18.05.2005**
(21) Application number: 03025493.2
(22) Date of filing: 06.11.2003
(51) Int. Cl.: H01M 8/10, H01M 4/88, C25B 9/10

(54) **Method and apparatus for the continuous coating of an ion-exchange membrane**

(71) Applicant: BALLARD POWER SYSTEMS INC., Burnaby, B.C. V5J 5J9 (CA)
(72) Inventor: Wang, Haijiang, Burnaby British Columbia V5H 2J7 (CA); Ebbrell, Guy, Vancouver British Columbia V5Z 2K6 (CA); Lai, Evelyn, Burnaby British Columbia V5C 3C5 (CA); Mallinson, Steven, Coquitlam British Columbia V3K 6R3 (CA); Fiorini, Gianni, Vancouver British Columbia V5Y 1W9 (CA); Wessel, Silvia, Coquitlam British Columbia V3J 3R7 (CA)
(74) Representative: Beyer, Andreas, Dr.

(57) **Abstract**

An ion-exchange membrane may be continuously coated by depositing a catalyst composition on a release surface, drying the catalyst at an elevated temperature and then transferring the dried catalyst layer onto an ion-exchange membrane by applying pressure at a different elevated temperature. Also disclosed is an apparatus for thus continuously coating an ion-exchange membrane. The catalyst coated membrane is of particular use in polymer electrolyte membrane (PEM) fuel cells for which a membrane electrode assembly may be prepared by bonding fluid distribution layers to the catalyst coated membrane.

## Description

### BACKGROUND OF THE INVENTION

### Field Of The Invention

The present invention generally relates to a method and apparatus for continuously coating an ion-exchange membrane and, more particularly, to coating a catalyst layer on an ion-exchange membrane.

### Description of the Related Art

Electrochemical fuel cells convert fuel and oxidant to electricity and reaction product. Solid polymer electrochemical fuel cells generally employ a membrane electrode assembly ("MEA") in which an electrolyte in the form of an ion-exchange membrane is disposed between two electrode layers. The electrode layers are made from porous, electrically conductive sheet material, such as carbon fiber paper or carbon cloth. In a typical MEA, the electrode layers provide structural support to the membrane, which is typically thin and flexible.

The MEA contains an electrocatalyst, typically comprising finely comminuted platinum particles disposed in a layer at each membrane/electrode layer interface, to induce the desired electrochemical reaction. The electrodes are electrically coupled to provide a path for conducting electrons between the electrodes through an external load.

During operation of the fuel cell, at the anode, the fuel permeates the porous electrode layer and reacts at the anode electrocatalyst layer to form protons and electrons. The protons migrate through the ion-exchange membrane to the cathode. At the cathode, the oxygen-containing gas supply permeates the porous electrode material and reacts at the cathode electrocatalyst layer with the protons to form water as a reaction product.

Electrocatalyst can be incorporated at the electrode/membrane interface in polymer exchange fuel cells by applying it in a layer on either an electrode substrate or on the membrane itself. In the former case, electrocatalyst particles are typically mixed with a liquid to form a slurry or ink, which is then applied to the electrode substrate. While the slurry preferably wets the substrate surface to an extent, the slurry may penetrate into the substrate such that it is no longer catalytically useful. The reaction zone is generally only close to the ion-exchange membrane. Comparatively lower catalyst loadings can typically be achieved if the ion-exchange membrane is coated. In addition to waste of catalyst material, a thicker electrocatalyst layer may also lead to increased mass transport polarization.

Typical methods of preparing a catalyst coated membrane (CCM) also start with the preparation of a slurry. A slurry typically comprises a carbon-supported catalyst, the polymer matrix/binder and a suitable liquid vehicle such as, for example water, methanol or isopropanol. The slurry is then either directly applied onto the membrane by, for example screen printing, or applied onto a separate carrier or release film from which, after drying, it is subsequently transferred onto the membrane using heat and pressure in a decal process. However, there are problems with both of these general techniques. For example, if a slurry is directly applied to the membrane, the liquid vehicle may cause swelling of the membrane by as much as 25% in any direction. While swelling is not typically seen with the decal process, traditional decal processes are comparatively slow and not amenable to mass production.

Accordingly, there remains a need in the art for improved methods for coating ion-exchange membranes, particularly with regard to catalyst coatings. The present invention fulfills this need and provides further related advantages.

### BRIEF SUMMARY OF THE INVENTION

In brief, this invention is directed to methods and apparatus for continuously coating an ion-exchange membrane and, in particular, to coating a catalyst layer on an ion-exchange membrane.

In a first embodiment, a continuous method of coating an ion-exchange membrane with a catalyst layer comprises:
(a) coating a release surface with a catalyst ink;
(b) drying the catalyst ink at a first temperature to form the catalyst layer on the release surface; and
(c) transferring the catalyst layer from the release surface to the ion-exchange membrane by applying pressure at a second temperature, the second temperature being different than the first temperature.
As the method is a continuous method, the coating, drying and transferring steps are performed simultaneously on different regions of the same release surface such that the cycle can continue continuously.

Typically, the first temperature is less than the second temperature. For example, the first temperature may be less than 110°C, whereas the second temperature may be greater than the glass transition temperature of the ion-exchange membrane. For a NAFION® based membrane, a suitable second temperature would be, for example, 150-180°C.

Transfer of the catalyst layer from the release surface to the ion-exchange membrane is improved if the catalyst layer adheres to the ion-exchange membrane to a greater degree than to the release surface. The adhesion of the catalyst layer to the release surface may be reduced by, for example, coating a separate releasing agent on the release surface prior to the coating the catalyst ink step. A suitable releasing agent is a solution of polytetrafluoroethylene.

To better prepare the release surface for a subsequent cycle, the release surface may also be cleaned after the transferring step.

In another embodiment, both sides of the membrane are continuously coated with catalyst layers. In such an embodiment, the transferring step is to a first surface of the ion-exchange membrane, the release surface being a first release surface, the catalyst ink being an anode catalyst ink, the catalyst layer being an anode catalyst layer, the method further comprising:
(d) coating a second release surface with a cathode catalyst ink;
(e) drying the cathode catalyst ink at a third temperature to form a cathode catalyst layer on the second release surface; and
(f) transferring the cathode catalyst layer from the second release surface to a second surface of the ion-exchange membrane by applying pressure at a fourth temperature.
Typically, both the anode and cathode catalyst layers may be coated simultaneously onto the ion-exchange membrane. Fluid diffusion layers may then be bonded onto the coated ion-exchange membrane to form a complete membrane electrode assembly (MEA).

In a further embodiment, an apparatus for coating an ion-exchange membrane comprises:
(a) two squeeze rollers;
(b) a rolling belt associated with one of the two squeeze rollers, the rolling belt having a coating region, a drying region next to the coating region and a transferring region next to the drying region, the transferring region being between the two squeeze rollers;
(c) a catalyst ink coater associated with the coating region of the rolling belt; and
(d) a dryer associated with the drying region of the rolling belt.
The catalyst ink coater may be, for example, a doctor blade coater or any other conventional means for depositing a catalyst ink on a surface. The dryer may be, for example, an oven.

The apparatus may further comprise a releasing agent coater associated with the rolling belt before the coating region and/or a belt cleaner after the transferring region.

The rolling belt may further comprise a tension roller spaced from the squeeze roller. In an alternative embodiment, the rolling belt may be integral with the surface of the squeeze roller such that the surface of the squeeze roller also functions as the release surface.

In a more specific embodiment, two rolling belts are provided, each rolling belt being associated with each squeeze roller, a catalyst ink coater associated with the coating region of each rolling belt and a dryer associated with the drying region of each rolling belt.

These and other aspects of the invention will be evident upon reference to the attached figures and following detailed description.

### BRIEF DESCRIPTION OF THE DRAWINGS

Figure 1 is a cross-sectional view of a membrane electrode assembly.
Figure 2 is a schematic of an apparatus for coating an ion-exchange membrane according to a first embodiment of the present invention.
Figure 3 is a schematic of an apparatus for coating an ion-exchange membrane according to a second embodiment of the present invention.

In the above figures, similar references are used in different figures to refer to similar elements.

### DETAILED DESCRIPTION OF THE INVENTION

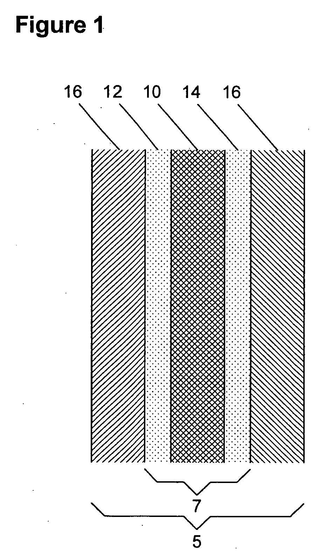

Figure 1 is a cross-sectional view of a membrane electrode assembly (MEA) 5. MEA 5 comprises an ion-exchange membrane 10 interposed between an anode catalyst layer 12, a cathode catalyst layer 14 and fluid distribution layers 16. A catalyst coated membrane (CCM) 7 comprises membrane 10 and catalyst layers 12, 14.

Fluid distribution layers 16 are electrically conductive and fluid permeable. Electrical conductivity allows for the electron flow from the anode to the cathode through an external load. Permeability allows for the supply of fuel and oxidant from the fuel and oxidant streams respectively to the electrocatalyst where the electrochemical reaction occurs. Fluid distribution layers typically comprise porous, electrically conductive and fluid permeable preformed sheets composed of materials such as, for example, carbon fiber paper, woven or non-woven carbon fabric, metal mesh or gauze, or microporous polymeric film.

The electrocatalyst in catalyst layers 12, 14 may be a metal black, an alloy or a supported metal-based catalyst, for example, platinum on carbon particles. Catalyst layers 12 and 14 may also include an organic binder such as polytetrafluoroethylene (PTFE), polymer electrolyte, additives and fillers. Due to the different catalytic reactions occuring during operation of the fuel cell at the anode as compared to the cathode, anode catalyst layer 12 and cathode catalyst layer 14 typically comprise different catalytic compositions such as, for example, different catalysts, different amounts of catalyst and/or different binders.

Ion-exchange membrane 10 may be, for example, a fluoropolymer containing pendant sulfonic acid functional groups and/or carboxylic acid functional groups. A typical perfluorosulfonic acid/PTFE copolymer membrane can be obtained from DuPont Inc. under the trade designation NAFION®.

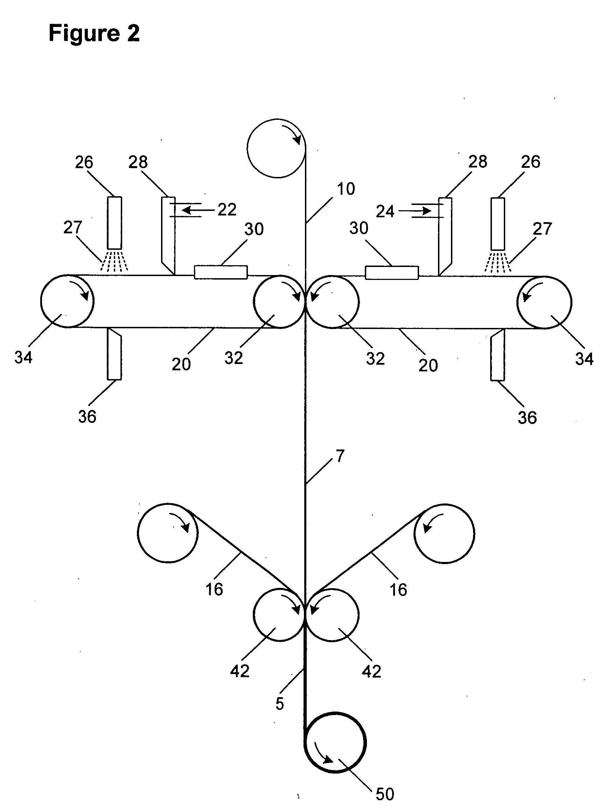

In Figure 2, an apparatus for coating ion-exchange membrane 10 with a catalyst layer to prepare CCM 7 is illustrated. Rolling belts 20 pass around tension rollers 34 and squeeze rollers 32. Rolling belts 20 may be, for example, metal, polymeric films or plastic sheets. An anode catalyst ink 22 and a cathode catalyst ink 24 are deposited onto the rolling belts using conventional techniques in either a discrete or continuous process. For example, catalyst ink coater 28 deposits catalyst ink 22 or 24 onto respective rolling belts 20 in a continuous process with a nozzle (not shown) followed by a doctor blade such that a thin film of catalyst ink (not shown) is formed on rolling belts 20. Other conventional methods of depositing a catalyst ink are known, such as, for example, screen printing. Rolling belts 20 subsequently pass the respective thin film of catalyst ink through ovens 30 where the inks are dried to form catalyst layers on the rolling belts. Ovens 30 dry the catalyst layers by heating to an elevated temperature. Such an elevated temperature may be, for example, less than 110°C.

Squeeze rollers 32 apply heat and pressure to thereby transfer the dried catalyst layers from rolling belts 20 to membrane 10. Suitable pressures are, for example, 200 psig. The application of heat raises the temperature of the system to a second temperature, preferably greater than the glass transition temperature of the ion-exchange membrane. For NAFION® based membranes, a suitable temperature would be, for example, between approximately 150°C and 180°C. The transfer of the catalyst layers to membrane 10 thus produces CCM 7.

Different temperatures are used in each of the drying and transferring steps. The drying rate affects the structure of the catalyst layer on rolling belts 20. If the drying rate is too high, then the catalyst layer may crack. Comparatively higher temperatures are preferably used in transferring the catalyst layer to membrane 10 to improve bonding. In particular, if a temperature above the glass transition temperature of membrane 10 is used, membrane 10 softens thereby allowing better adhesion with the catalyst layer. If the transfer temperature is too low, transfer may not be complete. The drying step may result in complete drying wherein all of the solvent has been removed from the coated release surface. Alternatively, the drying step may only result in partial drying.

To assist with the transfer of the catalyst layer to membrane 10, the catalyst layer preferably adheres to membrane 10 to a greater degree than to rolling belts 20. As mentioned in the preceding paragraph, using a temperature higher than the glass transition temperature increases adhesion between membrane 10 and the catalyst layer. Similarly, transfer may be improved by decreasing adhesion between rolling belts 20 and the catalyst layer. For example, a releasing agent 27 may be coated on rolling belts 20 prior to coating of catalyst composition 22 and 24. A suitable releasing agent would be, for example, a polytetrafluoroethylene solution. In Figure 2, sprayer 26 coats rolling belts 20 with such a releasing agent.

As rolling belts 20 cycle from coating, drying, transferring and back to coating, wet brush 36 may be positioned along rolling belts 20 after transfer of the catalyst layers to clean the respective belt from residual catalyst layer and thereby better prepare the belt to be coated with a fresh film of catalyst ink 22 or 24.

Conventional processing may then be used to produce MEA 5 from CCM 7. In Figure 2, MEA 5 is continuously prepared by passing CCM 7 and fluid distribution layers 16 through a second pair of squeeze rollers 42. MEA 5 may then be stored in a roll 50 or alternatively, MEA 5 may be immediately cut into the appropriate shape and size for use in an electrochemical fuel cell. However, it is understood that CCM 7 could be stored into a roll prior to bonding with fluid distribution layers 16 to form the MEA or even cut into appropriately sized pieced to be bonded in a discrete process with similarly sized fluid distribution layers 16.

As an alternative to the embodiment illustrated in Figure 2, CCM 7 may be prepared in two distinct steps with coating of each side of membrane 10 being done consecutively. Alternatively, one of the anode or cathode catalyst layers may be coated on membrane 10 followed by application of fluid distribution layer 16 before continuing with coating of the other catalyst layer. At any stage, the partially prepared MEA could be rolled and stored before continuing.

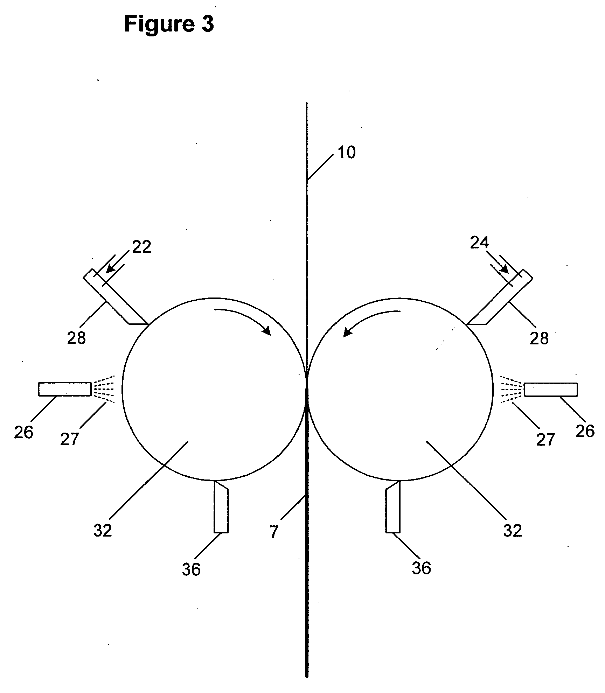

Figure 3 illustrates an alternate embodiment wherein catalyst inks 22, 24 are deposited directly onto squeeze rollers 32. In such an embodiment, squeeze rollers 32 must be of adequate size to allow for coating and drying of the catalyst layer prior to transfer to membrane 10. As in Figure 2, sprayers 26 coat the surface of squeeze rollers 32 with a releasing agent 27 prior to coating with catalyst compositions 22 and 24 through knife blade coaters 28. Also as in Figure 2, the surface of squeeze rollers 32 are cleaned with belt cleaners 36 after the dried catalyst layer is transferred to membrane 10 to form CCM 7.

A significant difference between the two illustrated embodiments is that a more complicated heating system (not shown) is needed in Figure 3 so that drying of the catalyst layer can occur at a different temperature than transfer of the catalyst layer to membrane 10. An advantage of the embodiment illustrated in Figure 2 is that the first temperature for the drying step can be more easily controlled independently of the second temperature for the transferring step.

While particular steps, elements, embodiments and applications of the present invention have been shown and described, it will be understood, of course, that the invention is not limited thereto since modifications may be made by persons skilled in the art, particularly in light of the foregoing teachings. It is therefore contemplated by the appended claims to cover such modifications as incorporate those steps or elements that come within the spirit and scope of the invention.

## Claims

1. A continuous method of coating an ion-exchange membrane with a catalyst layer comprising:
coating a release surface with a catalyst ink;
drying the catalyst ink at a first temperature to form the catalyst layer on the release surface; and
transferring the catalyst layer from the release surface to the ion-exchange membrane by applying pressure at a second temperature, the second temperature being different than the first temperature;
wherein the coating, drying and transferring steps are performed simultaneously on different regions of the same release surface.

2. The continuous method of claim 1 wherein the catalyst layer adheres to the ion-exchange membrane to a greater degree than to the release surface.

3. The continuous method of claim 1 wherein the first temperature is less than the second temperature.

4. The continuous method of claim 1 wherein the first temperature is less than 110°C.

5. The continuous method of claim 1 wherein the second temperature is greater than the glass transition temperature of the ion-exchange membrane.

6. The continuous method of claim 1 wherein the second temperature is from 150-180°C.

7. The continuous method of claim 1, further comprising coating a releasing agent on the release surface prior to the coating the catalyst ink step.

8. The continuous method of claim 7 wherein the releasing agent is a solution of polytetrafluoroethylene.

9. The continuous method of claim 1, further comprising cleaning the release surface after the transferring step.

10. The continuous method of claim 1, further comprising bonding a fluid diffusion layer to the catalyst layer.

11. The continuous method of claim 1 wherein the transferring step is to a first surface of the ion-exchange membrane, the release surface being a first release surface, the catalyst ink being an anode catalyst ink, the catalyst layer being an anode catalyst layer, the method further comprising:
coating a second release surface with a cathode catalyst ink;
drying the cathode catalyst ink at a third temperature to form a cathode catalyst layer on the second release surface; and
transferring the cathode catalyst layer from the second release surface to a second surface of the ion-exchange membrane by applying pressure at a fourth temperature.

12. The continuous method of claim 11 wherein the transferring the anode catalyst layer and the transferring the cathode catalyst layer steps occur simultaneously.

13. The continuous method of claim 11, further comprising bonding fluid diffusion layers to each anode and cathode layer.

14. An apparatus for coating an ion-exchange membrane, the apparatus comprising:
two squeeze rollers;
a rolling belt associated with one of the two squeeze rollers, the rolling belt having a coating region, a drying region next to the coating region and a transferring region next to the drying region, the transferring region being between the two squeeze rollers;
a catalyst ink coater associated with the coating region of the rolling belt; and
a dryer associated with the drying region of the rolling belt.

15. The apparatus of claim 14 wherein the catalyst ink coater comprises a doctor blade coater.

16. The apparatus of claim 14 wherein the dryer is an oven.

17. The apparatus of claim 14, further comprising a releasing agent coater associated with the rolling belt at a position before the coating region.

18. The apparatus of claim 14, further comprising a belt cleaner associated with the rolling belt at a position after the transferring region.

19. The apparatus of claim 14 wherein the rolling belt further comprises a tension roller spaced from the squeeze roller.

20. The apparatus of claim 14 wherein the rolling belt is integral with the surface of the squeeze roller.

21. The apparatus of claim 14 wherein the rolling belt comprises two rolling belts, each rolling belt being associated with each squeeze roller, a catalyst ink coater associated with the coating region of each rolling belt and a dryer associated with the drying region of each rolling belt.
